# FASCICULE DE BREVET EUROPEEN

(11) **EP 2 226 248 B1**
(45) Date de publication et mention de la délivrance du brevet: **22.04.2015**
(21) Numéro de dépôt: 10155146.3
(22) Date de dépôt: 02.03.2010
(51) Int. Cl.: B64G 1/50, F28D 15/00, B64G 1/10, F28D 15/02

(54) **Dispositif de contrôle thermique pour un engin spatial**
Wärmekontrollvorrichtung für ein Raumfahrzeug
Thermal control device for a spacecraft

(30) Priorité: 06.03.2009 FR 0901031
(43) Date de publication de la demande: 08.09.2010
(73) Titulaire: Thales, 92200 Neuilly Sur Seine (FR)
(72) Inventeur: Merino, Anne-Sophie, 06210, Mandelieu (FR); Hugon, Julien, 83440, Montauroux (FR); Canton, Valérie, 06210, Mandelieu (FR); Hugonnot, Patrick, 06370, Mouans-Sartoux (FR); Dargent, Thierry, 06810, Auribeau-sur-Saigne (FR); Nann, Isabelle, 06150, Cannes la Bocca (FR)
(74) Mandataire: Esselin, Sophie

(56) Documents cités:
- EP-A- 1 961 659
- DE-U1- 20 314 532
- FR-A- 2 690 040
- FR-A- 2 812 075
- US-A- 3 613 778
- US-A1- 2003 051 859

## Description

Le domaine de l'invention concerne des dispositifs de contrôle thermique pour un groupe d'équipements dissipatifs d'un satellite et plus généralement d'un engin spatial.

De manière générale, les satellites comportent un ensemble d'équipements destinés à réaliser les fonctions des missions pour lesquelles ils sont envoyés dans l'espace, notamment des missions d'observations ou de télécommunication. Ces équipements consomment et dissipent une quantité d'énergie importante qu'il est nécessaire d'évacuer en dehors de la structure du satellite afin que ces équipements restent dans une plage de température nominale. Pour cela, les satellites sont équipés d'un dispositif de contrôle thermique comprenant notamment des conduits de circulation de fluide thermique, communément appelé caloducs, et des boucles fluides permettant de transporter la chaleur des équipements dissipatifs vers des éléments radiatifs rayonnant l'énergie thermique vers l'Espace. Dans les satellites, il est courant d'utiliser les panneaux structuraux pour installer des surfaces radiatives. Dans ces cas de configuration, la puissance thermique que l'on peut évacuer est limitée par la taille des panneaux structuraux. Le dimensionnement des satellites consiste entre autre à minimiser la masse du contrôle thermique, les dimensions des éléments associés devant être limitées afin de rendre possible leur intégration finale dans le satellite, l'encombrement associé à ce dernier étant aussi à limiter pour l'intégrer au mieux dans le lanceur. Pour améliorer l'évacuation thermique vers l'espace, il est connu de mettre en place sur le satellite des surfaces radiatives déployables double ou simple face pouvant rayonner à plus ou moins haute température pour évacuer une partie de la dissipation thermique et ainsi garantir les niveaux de température admissibles pour les équipements. Cependant, un tel système déployable alourdit la structure du satellite et augmente l'encombrement et la complexité du dispositif de refroidissement par la présence des moyens de commande et des mécanismes permettant le déploiement des panneaux.

Le document FR 2812075, qui est considéré comme l'art antérieur le plus proche, divulgue un dispositif de dissipation de chaleur destiné à prélever la dissipation thermique générée par un groupe d'équipements dissipatifs d'un engin spatial dans une zone d'évaporation avant d'aller rejeter vers l'espace froid cette chaleur via une zone de condensation.

L'engin spatial comprend une pluralité de panneaux structuraux.
Le dispositif de contrôle thermique comprend des moyens de circulation d'un fluide thermique reliant dans une boucle fermée au moins la zone d'évaporation et la zone de condensation.

La zone d'évaporation constitue une première surface d'échange thermique directement ou indirectement via d'autres moyens de transfert thermique.

La zone de condensation constitue une seconde surface d'échange thermique, directement ou indirectement via d'autres moyens de transfert thermique avec des radiateurs rayonnant vers l'Espace.

Ces surfaces comportent un tubage à parois minces de petit diamètre disposé ou incorporé entre elles ou monté sur celles- ci. Le tubage est raccordé au dispositif de dissipation de chaleur.

La zone de condensation est constituée d'au moins une partie d'échange thermique comprenant un réseau d'une pluralité d'éléments d'échange thermique répartis sur leur surface d'échange thermique respective.

On connaît un dispositif de contrôle thermique embarqué à bord d'un engin spatial décrit dans la demande de brevet FR2912995A1. Ce dispositif permet de découpler thermiquement les équipements dissipatifs de leurs radiateurs associé et de faire varier les surfaces d'échange thermique radiatives selon la quantité d'énergie thermique à évacuer vers l'Espace au moyen d'un circuit de circulation du fluide comportant plusieurs branches hydrauliques pouvant être isolées entres elle. Ce système présente des inconvénients. Le circuit hydraulique du dispositif de contrôle thermique, particulièrement la zone de condensation en contact avec la surface radiative orientée vers l'espace, est exposé aux agressions micrométéorites. Pour cela, il est connu d'améliorer la fiabilité du dispositif de contrôle thermique soit en épaississant les éléments d'échange thermique de la zone de condensation et ceux de la zone d'évaporation si besoin, soit en mettant en place un circuit hydraulique totalement redondant. Ces deux philosophies sont très pénalisantes d'un point de vue de la masse. Par ailleurs, lorsque la zone d'évaporation et la zone de condensation sont constituées par des systèmes tubulaires continus, les pertes de charge peuvent être non négligeables, notamment lorsqu'une configuration tout série est privilégiée pour éviter les instabilités thermo hydrauliques, ce qui impose un travail de compression supplémentaire pour atteindre l'objectif de rayonnement à haute température. Ceci a un impact sur la masse du dispositif, sur sa consommation énergétique et représente une contrainte d'intégration quand les évaporateurs et condenseurs doivent être redondés pour des raisons de fiabilité, cela notamment du fait de la multitude de tubes sous les équipements. Enfin, les panneaux structuraux actuels sont thermiquement conducteurs si bien qu'il est inenvisageable d'y monter des équipements sur la face interne et en même temps d'évacuer l'énergie thermique sur la face externe à plus haute température sans impacter le niveau de température des équipements en vis-à-vis à l'intérieur du satellite. Cela impose de superposer des panneaux pour assurer le découplage thermique nécessaire ou d'utiliser des structures additionnelles déployables, ces solutions augmentant significativement la masse de l'ensemble.

L'invention a pour objectif d'atteindre les objectifs de fiabilité d'un dispositif de contrôle thermique d'un satellite tout en optimisant son efficacité et en minimisant sa masse.

Pour cela, l'invention concerne d'abord, en général, un dispositif de contrôle thermique destiné à prélever la dissipation thermique générée par un groupe d'équipements dissipatifs d'un engin spatial dans une zone d'évaporation avant d'aller rejeter vers l'espace froid cette chaleur via une zone de condensation, l'engin spatial comportant une pluralité de panneaux structuraux et le dispositif de contrôle thermique comprenant des moyens de circulation d'un fluide thermique reliant dans une boucle fermée au moins la zone d'évaporation et la zone de condensation, la zone d'évaporation constituant une première surface d'échange thermique, directement ou indirectement via d'autres moyens de transfert thermique compacts et reliés en série et/ou parallèle ou par les tubes des moyens de circulation, avec les équipements dissipatifs associés aux panneaux structuraux et la zone de condensation constituant une seconde surface d'échange thermique, directement ou indirectement via d'autres moyens de transfert thermique, avec des radiateurs rayonnant vers l'Espace.

Avantageusement, la zone d'évaporation et/ou la zone de condensation sont constituées d'au moins une partie d'échange thermique comprenant un réseau d'une pluralité d'éléments d'échange thermique compacts répartis sur leur surface d'échange thermique respective et reliés en série et/ou parallèle par les tubes des moyens de circulation du fluide thermique.

La zone d'évaporation constitue une première surface d'échange thermique pouvant être reliée directement et/ou indirectement via d'autres moyens thermiques aux équipements dissipatifs. La zone de condensation constitue une seconde surface d'échange thermique pouvant être reliée directement et/ou indirectement via d'autres moyens thermiques avec des surfaces radiatives. Les éléments d'échange thermique compacts peuvent être en contact direct avec les équipements dissipatifs ou en contact avec des moyens de transfert thermique reliés aux équipements, comme des caloducs et/ou des boucles fluides.

On désigne par élément d'échange thermique compact les éléments communément appelés évaporateurs en ce qui concerne la zone d'évaporation et condenseurs en ce qui concerne la zone de condensation.

L'utilisation des éléments d'échange thermique compacts permet de limiter la surface à protéger des flux micrométéorites et donc la masse des échangeurs et de minimiser le gradient thermique entre le fluide circulant dans la zone d'évaporation et les équipements dissipatifs d'une part, entre le fluide circulant dans la zone condensation et les surfaces radiatives d'autre part. En outre, leur compacité permet d'une part de limiter les longueurs de circulation du fluide en leur sein, et donc de limiter les pertes de charge du fluide. Ceci peut permettre de mettre en place des réseaux thermo hydrauliques en tout série dans la zone d'évaporation et dans la zone de condensation ou du moins de limiter le nombre de branches fluides en parallèle dans les dites zones d'échange thermique.

Dans une variante préférentielle, au moins un panneau, sensiblement peu conducteur thermiquement en sens transverse perpendiculairement à son plan, comporte sur la face interne à l'engin au moins une partie d'échange thermique de la zone d'évaporation et sur la face externe à l'engin au moins une partie d'échange thermique de la zone de condensation. Le dit panneau structural est généralement en regard avec l'Espace et est choisi de façon qu'il respecte, de par son dimensionnement, les autres contraintes environnementales imposées par la mission. Ainsi, certains éléments d'échange thermique de la zone d'évaporation peuvent être aménagés au niveau d'un de ces panneaux, au niveau de la face intérieure, dans ou hors du panneau, alors que certains éléments d'échange thermique de la zone condensation sont en vis à vis aménagés au niveau de ce même panneau, pour transmettre la chaleur à sa face extérieure pouvant ainsi rayonner, si besoin, à plus haute température que celle des éléments d'échange thermique de la zone d'évaporation. En cas de rayonnement à haute température vis-à-vis de la température de fonctionnement des équipements, les panneaux structuraux du satellite peuvent donc être conservés comme panneaux rayonnants, ce qui diminue le bilan de masse global du contrôle thermique par rapport à une solution mettant en jeu d'autres structures fixes ou déployables destinées uniquement à rayonner la puissance à haute température.

Selon une variante, au moins une partie d'échange thermique de la zone d'évaporation est assemblée avec des moyens de transfert thermiques en contact d'un côté avec les éléments d'échange thermique compacts et d'un autre côté avec les équipements dissipatifs. Les moyens de transfert thermiques recouvrent partiellement une surface au moyen de plusieurs éléments agencés sur la dite surface. Ces moyens de transfert thermique peuvent être des caloducs et/ou des boucles fluides.

Cette configuration permet de limiter la surface globale de la zone d'évaporation, fragmentée en autant d'éléments que requis par l'agencement des caloducs et des équipements dissipatifs, éléments reliés entre eux par de simples tubes. De tels échangeurs permettent des échanges thermiques efficaces. En outre, leur compacité permet d'une part de limiter les longueurs de circulation du fluide en leur sein, et donc de limiter les pertes de charge du fluide, d'autre part de limiter les surfaces des éléments d'échange thermique exposées directement ou indirectement à un flux de micrométéorites. Ceci diminue la masse du surépaississement requis pour les éléments d'échange thermique et donc limite la masse du contrôle thermique. L'agencement de tels évaporateurs compacts aménagés localement peut permettre de mettre en place des réseaux thermohydrauliques en tout série ou du moins de limiter le nombre de branches fluides en parallèle dans la zone d'évaporation.

Selon une variante, au moins une partie d'échange thermique de la zone de condensation est assemblée avec des moyens de transfert thermiques en contact d'un côté avec les éléments d'échange thermique compacts et d'un autre côté avec un radiateur. De même, les moyens de transfert thermiques recouvrent partiellement une surface au moyen de plusieurs éléments agencés sur la dite surface. Ces moyens de transfert thermique peuvent être des caloducs et/ou des boucles fluides.

Cette configuration permet de limiter la surface globale de la zone de condensation, fragmentée en autant d'éléments que requis par l'agencement des caloducs et des surfaces radiatives, éléments reliés entre eux par de simples tubes. De tels échangeurs permettent des échanges thermiques efficaces. En outre, leur compacité permet d'une part de limiter les longueurs de circulation du fluide en leur sein, et donc de limiter les pertes de charge du fluide, d'autre part de limiter les surfaces des éléments d'échange thermique exposés à l'Espace et donc exposés au flux de micrométéorites. La probabilité d'impact est par conséquent limitée. Ceci diminue la masse du surépaississement requis pour les éléments d'échange thermique regardant l'Espace et donc limite la masse du contrôle thermique. L'agencement de tels condenseurs compacts aménagés localement peut permettre de mettre en place des réseaux thermohydrauliques en tout série ou du moins de limiter le nombre de branches fluides en parallèle dans la zone de condensation.

Selon une variante de l'invention, les moyens de circulation du fluide dans les différentes parties d'échange thermique de la zone d'évaporation ont une configuration série et/ou parallèle. La configuration tout série est préférée car elle permet de limiter les instabilités thermo hydrauliques entre les différentes parties d'échange thermique. Cependant, cette configuration n'est pas toujours réalisable d'un point de vue des pertes de charge admissibles. Dans la configuration parallèle, il est possible d'utiliser des éléments d'isolation des branches qui permettent en cas de panne d'isoler une partie d'échange thermique du reste du système si bien qu'il est toujours possible d'assurer la mission dans un mode dégradé. Cette configuration peut permettre de s'affranchir du besoin de redondance de la zone d'évaporation et, d'une manière générale, du dispositif thermique, ce qui apporte un gain de masse notable.

Selon une variante de l'invention, les moyens de circulation du fluide dans les différents circuits de circulation du fluide thermique de la zone de condensation ont une configuration série et/ou parallèle. Dans la configuration parallèle, il est possible d'utiliser des éléments d'isolation si bien qu'en cas de perte d'un circuit de circulation du fluide thermique, son isolation du reste du système thermique permet d'assurer la mission dans un mode dégradé. Cette conformation peut permettre de s'affranchir du besoin de redondance de la zone de condensation et, d'une manière générale, du dispositif thermique, ce qui apporte un gain de masse notable.

Selon une variante de l'invention, les moyens de circulation du fluide thermique comportent un premier et un second circuit de circulation, les moyens de transfert thermiques assemblés à une partie d'échange thermique de la zone de condensation sont en contact avec au moins un premier et un deuxième éléments d'échange thermique compacts, le premier élément étant en contact avec le premier circuit de circulation du fluide thermique et le second élément en contact avec le second circuit de circulation.

Selon une variante de l'invention, les moyens de circulation du fluide thermique comportent un premier et un second circuit de circulation, les moyens de transfert thermiques assemblés à une partie d'échange thermique de la zone d'évaporation sont en contact avec au moins un premier et un deuxième éléments d'échange thermique compacts, le premier élément étant en contact avec le premier circuit de circulation du fluide thermique et le second élément étant en contact avec le second circuit de circulation.

Selon une variante de l'invention, la zone d'évaporation comprend des éléments d'échange thermique de type conduit tubulaire qui sont les moyens même de circulation du fluide thermique, configurés en série et/ou en parallèle, et reliés directement aux équipements dissipatifs.

Selon une variante de l'invention, la zone de condensation comprend des éléments d'échange thermique de type conduit tubulaire qui sont les moyens même de circulation du fluide thermique, configurés en série et/ou en parallèle, et reliés directement à un panneau rayonnant.

Selon une variante, la zone d'évaporation et/ou la zone de condensation sont constituées d'une pluralité de parties d'échanges thermiques (200, 201, 202) et les moyens de circulation du fluide thermique relient lesdits équipements en série et/ou en parallèle.

Selon une variante de type machine thermique, la boucle de circulation du fluide thermique comprend également une zone de détente directement en amont de la zone d'évaporation et une zone de compression directement en aval de la zone d'évaporation. Selon un mode de réalisation de cette dernière variante les moyens de circulation du fluide thermique comprennent des moyens pour inverser le sens de circulation du fluide thermique de façon que la zone de condensation et la zone d'évaporation soient interverties. Selon un quelconque mode de réalisation des deux dernières variantes, la zone de détente comprend une pluralité n de détendeurs pour contrôler en température une pluralité n de parties d'échange thermique de la zone d'évaporation à un ou des niveaux de température différents, les moyens de circulation du fluide thermique reliant lesdits équipements en parallèle. Le dispositif de l'invention, par le biais de moyens de circulation, propose selon cette variante de prélever tout ou partie de la dissipation thermique d'un satellite dans une zone dite d'évaporation associée aux panneaux structuraux (murs principaux du satellite et étagères internes), de comprimer la vapeur résultante en sortie de cette zone et d'élever ainsi la température du fluide avant d'aller condenser celui-ci au niveau de radiateurs fixes ou déployables qui évacueront efficacement à haute température par rayonnement la puissance totale vers l'espace froid. L'option de pouvoir utiliser des éléments compacts thermo hydrauliquement efficaces au niveau de la zone d'évaporation et de la zone de condensation permet de minimiser les niveaux de compression requis pour rayonner à haute température, ce qui à un impact notable sur la consommation énergétique du dispositif thermique, ce qui se traduit aussi en terme de gain de masse.

Selon une variante de l'invention, les solutions proposées ci-dessus, hormis les variantes de machine thermique, s'appliquent à toute boucle diphasique dont le moyen pour faire circuler le fluide est une pompe mécanique, boucle présentant une zone d'évaporation et une zone de condensation.

Selon une variante de l'invention, les solutions proposées ci-dessus, hormis les variantes de machine thermique, s'appliquent à toute boucle diphasique dont le moyen pour faire circuler le fluide est une pompe capillaire, boucle présentant une zone d'évaporation et une zone de condensation.

L'invention se destine particulièrement pour les satellites de télécommunication. Avantageusement, il comporte des parties d'échange thermique en contact avec lesdits équipements dissipatifs étagés. Un satellite comporte un module de service et un module de communication, et avantageusement les surfaces externes des panneaux structuraux des modules supportent au moins un radiateur. Selon une variante, au moins un radiateur du satellite est déployable.

L'invention sera mieux comprise et d'autres avantages apparaîtront à la lecture de la description qui va suivre donnée à titre non limitatif et grâce aux figures annexées parmi lesquelles :
La figure 1 représente un schéma fonctionnel d'architecture hydraulique d'un dispositif auquel s'applique l'invention. Il représente une architecture comprenant une zone d'évaporation, une zone de condensation, et un moyen de mise en circulation du fluide caloporteur ou frigorigène.
La figure 2 représente une partie d'échange thermique de la zone d'évaporation destinée à être utilisée dans un dispositif selon l'invention.
La figure 3 représente une partie d'échange thermique de la zone de condensation destinée à être utilisée dans un dispositif selon l'invention.
La figure 4 représente un schéma d'une pluralité d'éléments d'échange thermique configurés en parallèle et en série dans un dispositif selon l'invention pour une zone d'évaporation ou une zone de condensation.
La figure 5 représente une architecture hydraulique du dispositif de contrôle thermique dans un mode de circulation inversée. La mise en circulation du fluide thermique est réalisée au moyen d'un système de compression.
La figure 6 représente une architecture hydraulique du dispositif de contrôle thermique dont la mise en circulation du fluide thermique est réalisée avec une pompe mécanique
La figure 7 représente une architecture hydraulique du dispositif de contrôle thermique dont la mise en circulation du fluide thermique est réalisée avec une pompe capillaire.
La figure 8 représente une architecture hydraulique du dispositif de contrôle thermique dont la mise en circulation du fluide thermique est réalisée avec un compresseur. Elle représente deux modes de circulation du fluide du fluide thermique inversés l'un par rapport à l'autre selon le mode de fonctionnement du dispositif selon l'invention.
La figure 9 représente un panneau de structure d'un satellite comportant sur la face interne des équipements dissipatifs en contact avec une partie de la zone d'évaporation et sur la face externe une partie de la zone de condensation en contact avec la surface radiative.

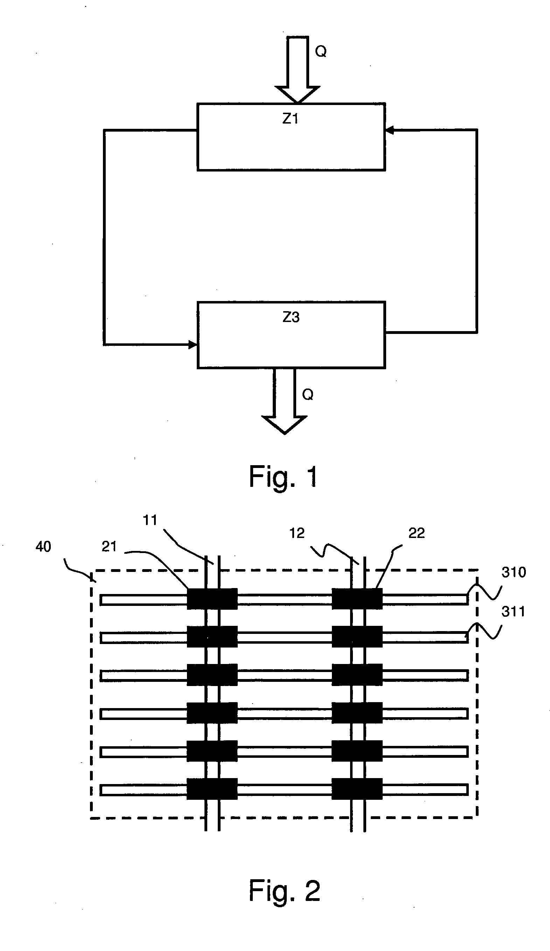

La figure 1 représente un schéma fonctionnel d'un mode de réalisation d'une architecture hydraulique du dispositif pour laquelle s'applique l'invention. Le dispositif de contrôle thermique se compose d'une zone d'évaporation, d'une zone de condensation, d'une zone de mise en circulation du fluide caloporteur ou frigorigène. L'invention concerne particulièrement les zones d'évaporation Z1 et de condensation Z3 du dispositif de contrôle thermique.

La figure 2 illustre une zone d'évaporation associée à une partie d'un panneau structural sur lequel sont montés des équipements dissipatifs. Cette zone d'évaporation est constituée de deux circuits de circulation du fluide thermique 11 et 12 dans une configuration série et/ou parallèle non précisée sur cette illustration. Chaque circuit de circulation du fluide thermique 11 et 12 d'une partie d'échange thermique de la zone d'évaporation est constitué d'une pluralité d'éléments d'échanges thermiques 21 et 22 de type compact associé en série sur cette illustration par des tubes de connections (agencement non nécessairement rectiligne des éléments). L'association entre les éléments d'échange thermique peut être faite en tout série comme indiqué sur la figure 2 mais peut aussi être réalisée en série/parallèle pour limiter les pertes de charge et minimiser la masse. Les circuits de circulation du fluide thermique sont reliés sur cette illustration par des moyens thermiques de type caloducs 310 et 311 aux équipements répartis sur une surface 40.

Les tubes caloducs 310 et 311 sont de préférence des tubes rectilignes mais peuvent être coudés pour des contraintes d'intégration, ils peuvent être soit intégrés au panneau soit montés sur la face interne où seront montés les équipements. La répartition des caloducs sur le panneau 40 est fonction des contraintes d'intégration, de la masse. Les éléments d'échange thermique compacts 21 et 22 sont des évaporateurs compacts présentant des caractéristiques de transfert de puissance thermique élevé, des coefficients d'évaporation élevés et de faibles pertes de charge. Ces évaporateurs compacts sont généralement des blocs parallélépipédiques de quelques centimètres à dizaines de centimètres de côté permettant ainsi de monter des équipements directement dessus si nécessaire. L'utilisation d'un réseau de caloducs n'est pas obligatoire et la zone d'évaporation peut se limiter à des circuits de circulation du fluide thermique de type conduit tubulaire dont les performances en terme de coefficient d'échange à l'évaporation, de densité de flux et de perte de charge sont optimisées. Dans ce cas, les circuits de circulation du fluide thermique de type conduit tubulaire sont en contact direct avec les équipements dissipatifs, le nombre de circulation sous les équipements sera défini en fonction des gradients thermiques admissibles entre le fluide et les équipements ainsi que par les températures à garantir. L'arrangement entre les tubes peut se faire en série et en parallèle selon les contraintes.

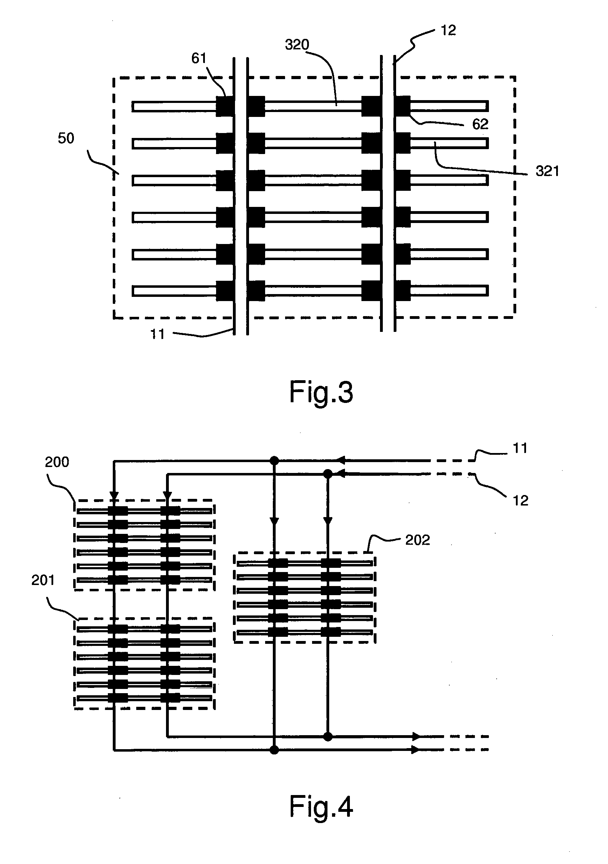

La figure 3 illustre une zone de condensation associée à un ou une partie d'un panneau rayonnant 50 vers l'Espace froid. Cette zone de condensation est constituée de deux circuits de circulation du fluide thermique 11 et 12 dans une configuration série et/ou parallèle non précisée sur cette illustration. Chaque circuit de circulation du fluide thermique dans une partie de la zone d'échange thermique de la zone de condensation 11 et 12 est constitué d'une pluralité d'éléments d'échanges thermiques 61 et 62 de type compact associé en série sur cette illustration par des tubes de connections (agencement non nécessairement rectiligne des éléments). L'association entre les éléments d'échange thermique peut être faite en tout série comme illustré sur la figure 3 mais peut aussi être réalisée en série/parallèle pour limiter les pertes de charge et minimiser la masse. De plus, un système d'isolation permet d'exploiter un ou plusieurs circuits de circulation du fluide thermique selon les besoins de puissance thermique à rayonner vers l'espace ou selon des contraintes liés à des cas de panne (perte d'un échangeur par impact de micrométéorite). Les circuits de circulation du fluide thermique sont reliés sur cette illustration par des moyens thermiques de type caloducs 320 et 321 au panneau radiatif 50.

Les tubes caloducs 320 et 321 sont de préférence des tubes rectilignes mais peuvent être coudés pour des contraintes d'intégration, ils peuvent être soit intégrés au panneau dans le cas d'utilisation de panneau structural soit montés sur une face dans le cas de surface radiative additionnelle. Les éléments d'échange thermique compacts 61 et 62 sont des condenseurs compacts présentant des caractéristiques de transfert de puissance thermique élevé, des coefficients de condensation élevés et de faibles pertes de charge. Ces condenseurs compacts sont généralement des blocs parallélépipédiques ou des cylindres qui peuvent enserrer les caloducs en leur extrémité.

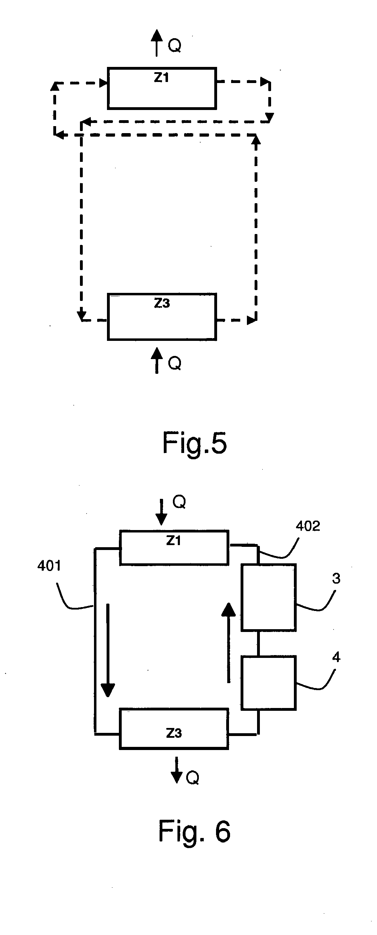

Les parties d'échange thermique de la zone d'évaporation et de la zone de condensation tels que décrit précédemment peuvent être mis en oeuvre sur au moins trois architectures hydrauliques de dispositif de contrôle thermique (figures 6, 7 et 8).

La figure 4 illustre une architecture applicable aux zones d'évaporation et de condensation. Les n éléments d'échange thermique de chaque zone 200, 201 et 202 sont associés sur cette figure en parallèle pour optimiser le budget de réchauffage et la masse. Les différentes zones 200, 201 et 202 sont associées en série (200 et 201) et en parallèle 202. Cette architecture permet de contrôler les éléments d'échange thermique de la zone d'évaporation et donc les équipements dissipatifs à différents niveaux de température. Cette architecture permet de balancer les zones de condensation pour équilibrer les puissances à évacuer par chaque panneau en fonction des environnements radiatifs. Dans une configuration d'évaporation, la figure 4 représente un schéma de zone d'évaporation divisée en 3 parties d'échange thermique, chacune composée de n éléments d'échange thermique (n peut être différent pour chaque échangeur). Les parties d'échange thermique correspondant aux zones 201 et 202 sont positionnés en série et sont donc contrôlés à un niveau de température identique, la zone 202 en parallèle peut être contrôlée à un niveau de température différent.

Les éléments d'échange thermique ont été aménagés dans une configuration parallèle/série (via des lignes fluide 11 et 12 proposées ici à titre d'exemple en parallèle) qui peut être différente de celle proposée par la figure.

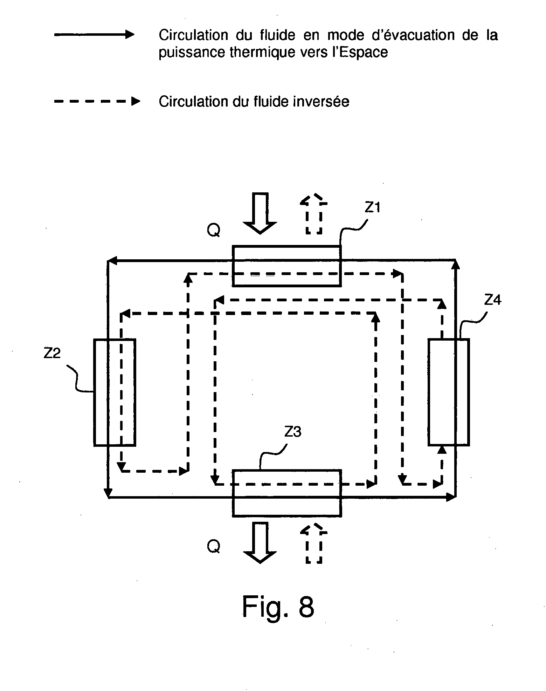

La figure 5 illustre une architecture réversible qui permet d'inverser le sens de circulation du fluide thermique de façon à ce que la zone de condensation et la zone d'évaporation soient interverties. Ce mode de réalisation a pour avantage de réduire le budget de réchauffage du système. La puissance thermique Q absorbées au niveau des surfaces radiatives de la zone Z3 (flux IR, flux solaires...) peut ainsi être utilisée pour maintenir les équipements dissipatifs en contact avec la zone Z1 à des niveaux de température acceptable dans les cas des phases de transfert mais aussi en orbite. Un système d'isolation permet d'inverser le sens de circulation de la boucle. Cette architecture réversible se destine particulièrement à l'architecture décrite en figure 8.

La figure 6 illustre un mode de réalisation de dispositif de contrôle thermique. Cette architecture comporte, reliés successivement en série dans une boucle fermée de circulation du fluide thermique, une zone d'évaporation Z1, une zone de condensation Z3, un moyen 4 de contrôle de la température de la boucle, communément appelé réservoir thermo hydraulique et un moyen 3 de mise en circulation du fluide caloporteur par pompe mécanique. Les circuits de circulation 401 de la zone d'évaporation Z1, de la zone de condensation Z3 et entre ces deux zones sont de préférence des circuits de circulation diphasique du fluide thermique. Les circuits de circulation 402 entre la zone de condensation et la zone d'évaporation sont de préférence des circuits de circulation monophasique.

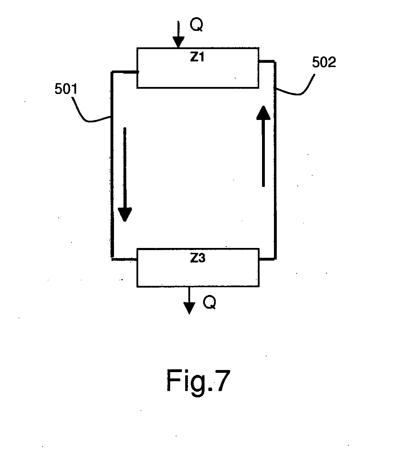

La figure 7 illustre un autre mode de réalisation de dispositif de contrôle thermique. Cette architecture comporte, reliés successivement en série dans une boucle fermée de circulation du fluide thermique, une zone d'évaporation Z1 et une zone de condensation Z3. La mise en circulation du fluide est réalisée au moyen d'une pompe capillaire au niveau de la zone d'évaporation. Les circuits de circulation 501 de la zone d'évaporation, de la zone de condensation et entre ces deux zones sont de préférence des circuits de circulation diphasique du fluide thermique. Cette architecture permet de prélever une plus grande quantité de chaleur sur les surfaces recouvrant les équipements dissipatifs et également de rayonner au niveau des surfaces radiatives une grande quantité de puissance thermique. Les circuits de circulation 502 entre la zone de condensation et la zone d'évaporation sont de préférence des circuits de circulation monophasique.

La figure 8 illustre un autre mode de réalisation de dispositif de contrôle thermique. Cette architecture comporte, reliés successivement en série dans une boucle fermée de circulation du fluide thermique, une zone d'évaporation Z1, une zone de compression Z2, une zone de condensation Z3 et une zone de détente Z4. Deux modes de circulation du fluide thermique sont représentés. Un premier mode, dont la circulation du fluide est représentée en trait plein, décrit l'architecture de la machine thermique permettant d'évacuer la puissance thermique Q, en flèche pleine en trait plein, des équipements dissipatifs vers l'Espace. La zone Z1 est la zone d'évaporation et la zone Z3 est la zone d'évaporation. Le second mode, dont la circulation du fluide est représentée en trait en pointillé, décrit l'architecture de la machine thermique en circulation inversée, comme décrit par la figure 5 précédemment. La puissance thermique Q absorbées, en flèche pleine en trait pointillé, au niveau des surfaces radiatives de la zone Z3 (flux IR, flux solaires...) peut ainsi être utilisée pour maintenir les équipements dissipatifs en contact avec la zone Z1 à des niveaux de température acceptable dans les cas des phases de transfert mais aussi en orbite. La zone de détente comprend un ou plusieurs détendeurs en série et/ou en parallèle pour contrôler des parties de la zone d'évaporation à des niveaux de températures différents. Par exemple, le nombre de détenteurs utilisés peut être fonction du nombre de branches de parties d'évaporateurs en parallèle et des plages de températures associées. Par exemple, des détenteurs de type capillaire ou thermostatique peuvent être utilisés. La zone de compression comprend un ou plusieurs compresseurs. Le fluide thermique utilisé pour cette architecture hydraulique est plutôt de type frigorigène.

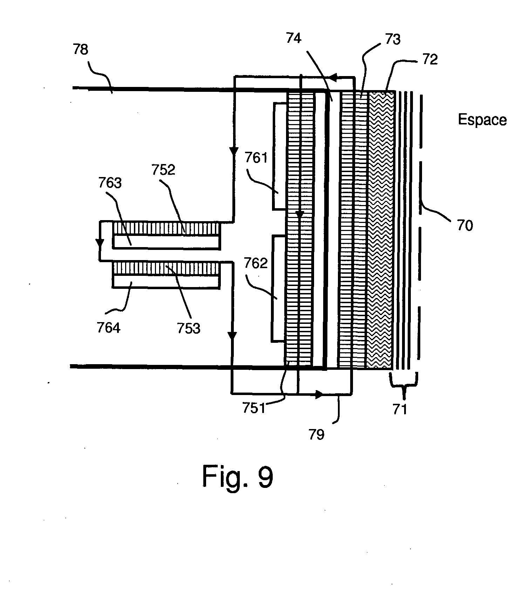

La figure 9 représente un schéma en coupe d'un satellite dans lequel est représenté une partie de la structure d'un satellite 78 avec un des panneaux de structure 74 comportant sur la surface interne une partie 751 de la zone d'évaporation en contact avec des équipements électroniques dissipatifs 761 et 762 supportés par le panneau 74, faiblement conducteur perpendiculairement à son plan, et sur la surface externe une partie 73 de la zone de condensation en contact avec une partie de la surface radiative 72. Le panneau de structure 74 est par exemple le panneau de face nord d'un satellite de télécommunication. Un satellite de télécommunication est le plus souvent composé de panneaux communément appelés Nord, Sud, Est, Ouest, Terre et Anti-terre. Tous ces panneaux peuvent comporter une face interne avec une partie de la zone d'évaporation et une face externe avec une partie de la zone de condensation comme le panneau 74 représentés sur la figure 8. De plus, le satellite comporte à l'intérieur du boîtier 78 des équipements électroniques 763 et 764 disposés en étagère et découplés des panneaux du satellite. Des parties de la zone d'évaporation 752 et 753 ont pour fonction de prélever la puissance thermique générée par les équipements dissipatifs. La surface radiative est orientée vers l'Espace. La surface radiative est recouverte de plusieurs couches de protection 71. Les couches améliorent la protection contre les agressions micrométéorites mais n'empêchent pas le transfert conducteur entre la zone de condensation et de rayonnement. La couche 70 recouvrant les surfaces radiatives est un moyen d'émettre la puissance dissipative tout en limitant l'absorption des flux thermiques externes (solaires et autre). Elle peut être constituée de miroirs. Les moyens de circulation 79 du fluide thermique circulent à l'intérieur des parties 751, 752 et 753 des zones d'évaporation et de condensation constituées de une ou plusieurs parties d'échange thermique. Les équipements dissipatifs positionnés en étagère à l'intérieur du satellite et les équipements dissipatifs positionnés sur les panneaux structuraux sont associés à un même circuit hydraulique de fluide thermique au moyen de branches du circuit en parallèles et/ou série.

Un satellite de télécommunication comporte un module dit de service et un module de communication. Les panneaux de ces deux modules peuvent être agencés avec le dispositif de contrôle thermique avec sur la face interne une partie de la zone d'évaporation et sur la face externe une partie de la zone de condensation. Le gradient thermique entre les faces des panneaux est élevé tandis que le gradient thermique est quasiment nul longitudinalement sur la face des panneaux.

Un avantage du dispositif selon l'invention est la mise en oeuvre d'une architecture de transfert de puissance thermique dans laquelle la zone d'évaporation est découplée thermiquement de la zone de condensation, structurellement liées à de même panneaux.

## Revendications

1. Dispositif de contrôle thermique destiné à prélever la dissipation thermique générée par un groupe d'équipements dissipatifs d'un engin spatial dans une zone d'évaporation avant d'aller rejeter vers l'espace froid cette chaleur via une zone de condensation, l'engin spatial comportant une pluralité de panneaux structuraux et le dispositif de contrôle thermique comprenant des moyens de circulation d'un fluide thermique reliant dans une boucle fermée au moins la zone d'évaporation et la zone de condensation, la zone d'évaporation constituant une première surface d'échange thermique, directement ou indirectement via d'autres moyens de transfert thermique compacts et reliés en série et/ou parallèle par les tubes des moyens de circulation, avec les équipements dissipatifs et la zone de condensation constituant une seconde surface d'échange thermique, directement ou indirectement via d'autres moyens de transfert thermique, avec des radiateurs rayonnant vers l'Espace, **caractérisé en ce que** la zone d'évaporation et/ou la zone de condensation sont constituées d'au moins une partie d'échange thermique (200) comprenant un réseau d'une pluralité d'éléments d'échange thermique compacts (21, 22) répartis sur leur surface d'échange thermique respective (40) et reliés en série et/ou parallèle par les tubes des moyens de circulation du fluide thermique (11, 12).

2. Dispositif selon la revendication 1, **caractérisé en ce qu'**au moins un panneau, sensiblement peu conducteur thermiquement en sens transverse perpendiculairement à son plan, comporte sur la face interne à l'engin au moins une partie d'échange thermique de la zone d'évaporation et sur la face externe à l'engin au moins une partie d'échange thermique de la zone de condensation.

3. Dispositif de contrôle thermique selon l'une quelconque des revendications 1 et 2, **caractérisé en ce qu'**au moins une partie d'échange thermique (200) de la zone d'évaporation est assemblée avec des moyens de transfert thermiques (310, 311) en contact d'un côté avec les éléments d'échange thermique compacts (21, 22) et d'un autre côté avec les équipements dissipatifs.

4. Dispositif de contrôle thermique selon l'une quelconque des revendications précédentes, **caractérisé en ce qu'**au moins une partie d'échange thermique de la zone de condensation est assemblée avec des moyens de transfert thermiques (320, 321) en contact d'un côté avec les éléments d'échange thermique compacts et d'un autre côté avec un radiateur.

5. Dispositif de contrôle thermique selon l'une quelconque des revendications précédentes, **caractérisé en ce que** les moyens de circulation du fluide thermique comportent un premier et un second circuit de circulation (11, 12), les moyens de transfert thermiques (310, 311) assemblés à une partie d'échange thermique de la zone d'évaporation (200) sont en contact avec au moins un premier et un deuxième éléments d'échange thermique compacts (21, 22), le premier élément (21) étant en contact avec le premier circuit de circulation du fluide thermique (11) et le second élément (22) étant en contact avec le second circuit de circulation (12).

6. Dispositif de contrôle thermique selon l'une quelconque des revendications précédentes, **caractérisé en ce que** les moyens de circulation du fluide thermique comportent un premier et un second circuit de circulation (11, 12), les moyens de transfert thermiques (320, 321) assemblés à une partie d'échange thermique de la zone de condensation sont en contact avec au moins un premier et un deuxième éléments d'échange thermique compacts (61, 62), le premier élément étant en contact avec le premier circuit de circulation du fluide thermique et le second élément en contact avec le second circuit de circulation.

7. Dispositif de contrôle thermique selon l'une quelconque des revendications précédentes, **caractérisé en ce que** la zone d'évaporation et/ou la zone de condensation sont constituées d'une pluralité de parties d'échanges thermiques (200, 201, 202) et les moyens de circulation du fluide thermique relient lesdits équipements en série et/ou en parallèle.

8. Dispositif selon l'une quelconque des revendications précédentes, **caractérisé en ce que** la boucle de circulation du fluide thermique comprend également une zone de détente directement en amont de la zone d'évaporation et une zone de compression directement en aval de la zone d'évaporation.

9. Dispositif de contrôle thermique selon la revendication 8, **caractérisé en ce que** les moyens de circulation du fluide thermique comprennent des moyens pour inverser le sens de circulation du fluide thermique de façon que la zone de condensation et la zone d'évaporation soient interverties.

10. Dispositif de contrôle thermique selon l'une quelconque des revendications 8 et 9, **caractérisé en ce que** la zone de détente comprend une pluralité n de détendeurs pour contrôler en température une pluralité n de parties d'échange thermique de la zone d'évaporation à un ou des niveaux de température différents, les moyens de circulation du fluide thermique reliant lesdits équipements en parallèle.

11. Dispositif de contrôle thermique selon l'une quelconque des revendications 1 à 7, **caractérisé en ce que** le moyen pour circuler le fluide thermique est une pompe mécanique (3).

12. Dispositif de contrôle thermique selon l'une quelconque des revendications 1 à 7, **caractérisé en ce que** le moyen pour circuler le fluide thermique est une pompe capillaire.

13. Dispositif selon l'une quelconque des revendications précédentes, **caractérisé en ce que** la zone de condensation comprend également des moyens d'échange thermique de type conduit tubulaire qui sont les moyens de circulation du fluide thermique, configurés en série et/ou en parallèle, et reliés directement à un panneau rayonnant.

14. Dispositif selon l'une quelconque des revendications précédentes, **caractérisé en ce que** la zone d'évaporation comprend également des moyens d'échange thermique de type conduit tubulaire qui sont les moyens de circulation du fluide thermique, configurés en série et/ou en parallèle, et reliés directement à des équipements dissipatifs.

15. Satellite de télécommunication, **caractérisé en ce qu'**il comprend un dispositif de contrôle thermique selon l'une quelconque des revendications précédentes.

16. Satellite selon la revendication 15 comportant un module de service et un module de communication, **caractérisé en ce que** les surfaces externes des panneaux structuraux des modules supportent au moins un radiateur.

17. Satellite selon l'une quelconque des revendications 15 à 16, **caractérisé en ce qu'**au moins un radiateur est déployable.

## Patentansprüche

1. Wärmekontrollvorrichtung, die dazu bestimmt ist, die von einer Gruppe wärmeabgebender Ausrüstungen eines Raumfahrzeugs in einer Verdampfungszone erzeugte Wärmeabgabe vor Auswurf dieser Wärme über eine Kondensationszone in den kalten Raum abzunehmen, wobei das Raumfahrzeug eine Vielzahl von Strukturtafeln aufweist und die Wärmekontrollvomichtung Zirkulationsmittel eines thermischen Fluids umfasst, die in einer geschlossenen Schleife mindestens die Verdampfungszone und die Kondensationszone verbinden, wobei die Verdampfungszone mit den abgebenden Ausrüstungen direkt oder indirekt über andere kompakte Wärmetransfermittel, die durch Rohre der Zirkulationsmittel in Reihe und/oder parallel verbunden sind, eine erste Wärmetauschfläche darstellt und die Kondensationszone direkt oder indirekt über andere Wärmetransfermittel mit Radiatoren, die in den Raum strahlen, eine zweite Wärmetauschfläche darstellt, **dadurch gekennzeichnet, dass** die Verdampfungszone und/oder die Kondensationszone aus mindestens einem Wärmetauschteil (200) gebildet sind, das ein Netz einer Vielzahl kompakter Wärmetauschelemente (21, 22) umfasst, die über ihre jeweilige Wärmetauschfläche (40) verteilt und in Reihe und/oder parallel durch die Rohre der Zirkulationsmittel des thermischen Fluids (11, 12) verbunden sind.

2. Vorrichtung nach Anspruch 1, **dadurch gekennzeichnet, dass** mindestens eine in transverser Richtung lotrecht zu ihrer Ebene wesentlich wenig wärmeleitende Tafel auf der Innenfläche zum Raumfahrzeug mindestens ein Wärmetauschteil der Verdampfungszone und auf der Außenfläche zum Raumfahrzeug mindestens ein Wärmetauschteil der Kondensationszone aufweist.

3. Wärmekontrollvorrichtung nach einem der Ansprüche 1 und 2, **dadurch gekennzeichnet, dass** mindestens ein Wärmetauschteil (200) der Verdampfungszone mit Wärmetransfermitteln (310, 311) im Kontakt auf der einen Seite mit den kompakten Wärmetauschelementen (21, 22) und auf der anderen Seite mit den abgebenden Ausrüstungen verbunden ist.

4. Wärmekontrollvorrichtung nach einem der vorangehenden Ansprüche, **dadurch gekennzeichnet, dass** mindestens ein Wärmetauschteil der Kondensationszone mit Wärmetransfermitteln (320, 321) im Kontakt auf einer Seite mit den kompakten Wärmetauschelementen und auf einer anderen Seite mit einem Radiator verbunden ist.

5. Wärmekontrollvorrichtung nach einem der vorangehenden Ansprüche, **dadurch gekennzeichnet, dass** die Zirkulationsmittel des thermischen Fluids einen ersten und einen zweiten Zirkulationskreis (11, 12) aufweisen, die mit einem Wärmetauschteil der Verdampfungszone (200) verbundenen Wärmetransfermittel (310, 311) im Kontakt mit mindestens einem ersten und einem zweiten kompakten Wärmetauschelement (21, 22) sind, wobei das erste Element (21) im Kontakt mit dem ersten Zirkulationskreis des thermischen Fluids (11) und das zweite Element (22) im Kontakt mit dem zweiten Zirkulationskreis (12) ist.

6. Wärmekontrollvorrichtung nach einem der vorangehenden Ansprüche, **dadurch gekennzeichnet, dass** die Zirkulationsmittel des thermischen Fluids einen ersten und einen zweiten Zirkulationskreis (11, 12) aufweisen, die mit einem Wärmetauschteil der Kondensationszone verbundenen Wärmetransfermittel (320, 321) im Kontakt mit mindestens einem ersten und einem zweiten kompakten Wärmetauschelement (61, 62) sind, wobei das erste Element mit dem ersten Zirkulationskreis des thermischen Fluids im Kontakt ist und das zweite Element mit dem zweiten Zirkulationskreis im Kontakt ist.

7. Wärmekontrollvorrichtung nach einem der vorangehenden Ansprüche, **dadurch gekennzeichnet, dass** die Verdampfungszone und/oder die Kondensationszone von einer Vielzahl von Wärmetauschteilen (200, 201, 202) gebildet sind und die Zirkulationsmittel des thermischen Fluids die Ausrüstungen in Reihe und/oder parallel verbinden.

8. Vorrichtung nach einem der vorangehenden Ansprüche, **dadurch gekennzeichnet, dass** die Zirkulationsschleife des thermischen Fluids ebenfalls eine Entspannungszone direkt vor der Verdampfungszone und eine Kompressionszone direkt nach der Verdampfungszone umfasst.

9. Wärmekontrollvorrichtung nach Anspruch 8, **dadurch gekennzeichnet, dass** die Zirkulationsmittel des thermischen Fluids Mittel umfassen, um die Zirkulationsrichtung des thermischen Fluids derart umzukehren, dass die Kondensationszone und die Verdampfungszone umgekehrt sind.

10. Wärmekontrollvorrichtung nach einem der Ansprüche 8 und 9, **dadurch gekennzeichnet, dass** die Entspannungszone eine Vielzahl n von Entspannern umfasst, um eine Vielzahl n von Wärmetauschteilen der Verdampfungszone mit einem oder verschiedenen Temperaturniveaus thermisch zu kontrollieren, wobei die Zirkulationsmittel des thermischen Fluids die Ausrüstungen parallel verbinden.

11. Wärmekontrollvorrichtung nach einem der Ansprüche 1 bis 7, **dadurch gekennzeichnet, dass** das Zirkulationsmittel des thermischen Fluids eine mechanische Pumpe ist (3).

12. Wärmekontrollvorrichtung nach einem der Ansprüche 1 bis 7, **dadurch gekennzeichnet, dass** das Zirkulationsmittel des thermischen Fluids eine Kapillarpumpe ist.

13. Vorrichtung nach einem der vorangehenden Ansprüche, **dadurch gekennzeichnet, dass** die Kondensationszone ebenfalls Wärmetauschmittel vom Typ Rohrleitung umfasst, die die Zirkulationsmittel des thermischen Fluids sind, die in Reihe und/oder parallel konfiguriert und direkt mit einer abstrahlenden Tafel verbunden sind.

14. Vorrichtung nach einem der vorangehenden Ansprüche, **dadurch gekennzeichnet, dass** die Verdampfungszone ebenfalls Wärmetauschmittel vom Typ Rohrleitung umfasst, die die Zirkulationsmittel des thermischen Fluids sind, die in Reihe und/oder parallel konfiguriert und direkt mit abgebenden Ausrüstungen verbunden sind.

15. Telekommunikationssatellit, **dadurch gekennzeichnet, dass** er eine Wärmekontrollvorrichtung nach einem der vorangehenden Ansprüche umfasst.

16. Satellit nach Anspruch 15, der ein Servicemodul und ein Kommunikationsmodul aufweist, **dadurch gekennzeichnet, dass** die externen Flächen der Strukturtafeln der Module mindestens einen Radiator tragen.

17. Satellit nach einem der Ansprüche 15 bis 16, **dadurch gekennzeichnet, dass** mindestens ein Radiator ausklappbar ist.

## Claims

1. A thermal control device intended to collect the thermal dissipation generated by a group of dissipative pieces of equipment of a spacecraft in an evaporation zone before discharging this heat to cold space via a condensation zone, the spacecraft comprising a plurality of structural panels and the thermal control device comprising means of circulating thermal fluid connecting, in a closed loop, at least the evaporation zone and the condensation zone, the evaporation zone constituting a first heat exchange surface, directly or indirectly via other heat transfer means that are compact and connected in series and/or in parallel by the tubes of the circulation means, with the dissipative equipment, and the condensation zone constituting a second heat exchange surface for exchanging heat, directly or indirectly, via other heat transfer means, with radiators radiating into space, **characterised in that** the evaporation zone and/or the condensation zone consist of at least one heat exchange part (200) comprising a network of a plurality of compact heat exchange elements (21, 22) distributed over their respective heat exchange surface (40) and connected in series and/or in parallel by the tubes of the thermal fluid circulation means (11, 12).

2. The device according to Claim 1, **characterised in that** at least one panel, which is a somewhat poor conductor of heat in the transverse direction perpendicular to its plane, comprises, on the face internal to the craft, at least one heat exchange part of the evaporation zone and, on the face external to the craft, at least one heat exchange part of the condensation zone.

3. The thermal control device according to either of Claims 1 and 2, **characterised in that** at least one heat exchange part (200) of the evaporation zone is assembled with heat transfer means (310, 311) in contact on one side with the compact heat exchange elements (21, 22) and on another side with the dissipative equipment.

4. The thermal control device according to any of the preceding claims, **characterised in that** at least one heat exchange part of the condensation zone is assembled with heat transfer means (320, 321) in contact on one side with the compact heat exchange elements and on another side with a radiator.

5. The thermal control device according to any of the preceding claims, **characterised in that** the thermal fluid circulation means comprise a first and a second circulation circuit (11, 12), the heat transfer means (310, 311) assembled with a heat exchange part of the evaporation zone (200) being in contact with at least a first and a second compact heat exchange element (21, 22), the first element (21) being in contact with the first thermal fluid circulation circuit (11), and the second element (22) being in contact with the second circulation circuit (12).

6. The thermal control device according to any of the preceding claims, **characterised in that** the thermal fluid circulation means comprise a first and a second circulation circuit (11, 12), the heat transfer means (320, 321) assembled with a heat exchange part of the condensation zone being in contact with at least a first and a second compact heat exchange element (61, 62), the first element being in contact with the first thermal fluid circulation circuit and the second element being in contact with the second circulation circuit.

7. The thermal control device according to any of the preceding claims, **characterised in that** the evaporation zone and/or the condensation zone consist(s) of a plurality of heat exchange parts (200, 201, 202) and the thermal fluid circulation means connect said equipment in series and/or in parallel.

8. The device according to any of the preceding claims, **characterised in that** the thermal fluid circulation loop also comprises a relaxation zone directly upstream of the evaporation zone and a compression zone directly downstream of the evaporation zone.

9. The thermal control device according to Claim 8, **characterised in that** the thermal fluid circulation means comprise means for reversing the direction in which the thermal fluid circulates such that the condensation zone and the evaporation zone are interchanged.

10. The thermal control device according to either of Claims 8 and 9, **characterised in that** the relaxation zone comprises a plurality n of pressure reducers to provide temperature control for a plurality n of heat exchange parts of the evaporation zone at one or more different temperature levels, the thermal fluid circulation means connecting said pieces of equipment in parallel.

11. The thermal control device according to any of Claims 1 to 7, **characterised in that** the means for circulating the thermal fluid is a mechanical pump (3).

12. The thermal control device according to any of Claims 1 to 7, **characterised in that** the means for circulating the thermal fluid is a capillary pump.

13. The device according to any of the preceding claims, **characterised in that** the condensation zone also comprises heat exchange means of the tubular pipe type which are the thermal fluid circulation means configured in series and/or in parallel and connected directly to a radiating panel.

14. The device according to any of the preceding claims, **characterised in that** the evaporation zone also comprises heat exchange means of the tubular pipe type which are the thermal fluid circulation means configured in series and/or in parallel and connected directly to dissipative equipment.

15. A telecommunications satellite, **characterised in that** it comprises a thermal control device according to any of the preceding claims.

16. The satellite according to Claim 15, comprising a service module and a communications module, **characterised in that** the external surfaces of the structural panels of the modules support at least one radiator.

17. The satellite according to either of Claims 15 to 16, **characterised in that** at least one radiator is deployable.
